(19) Europäisches Patentamt
European Patent Office
Office européen des brevets

(11) **EP 2 361 712 B1**

(12) **EUROPÄISCHE PATENTSCHRIFT**

(45) Veröffentlichungstag und Bekanntmachung des Hinweises auf die Patenterteilung:
**22.12.2021 Patentblatt 2021/51**

(51) Int Cl.:
**B23G 1/18** *(2006.01)* **B23Q 5/04** *(2006.01)*
**B23G 1/46** *(2006.01)*

(21) Anmeldenummer: **11155140.4**

(22) Anmeldetag: **21.02.2011**

(54) **Verfahren zum Erzeugen eines Gewindes auf einer Werkzeugmaschine, Kopplungsvorrichtung und Werkzeugmaschine**

Method for producing a thread on a machine tool, coupling device and machine tool

Procédé de production d'un filetage sur une machine-outil, dispositif de couplage et machine-outil

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.02.2010 DE 102010009349**

(43) Veröffentlichungstag der Anmeldung:
**31.08.2011 Patentblatt 2011/35**

(73) Patentinhaber: **EMUGE-Werk Richard Glimpel GmbH & Co.KG Fabrik für Präzisionswerkzeuge**
**91207 Lauf a.d. Pegnitz (DE)**

(72) Erfinder: **Liebald, Peter**
**91161, Hilpoltstein (DE)**

(74) Vertreter: **Schröer, Gernot H.**
**Meissner Bolte Patentanwälte**
**Rechtsanwälte Partnerschaft mbB**
**Bankgasse 3**
**90402 Nürnberg (DE)**

(56) Entgegenhaltungen:
EP-A1- 0 887 135    EP-A1- 2 113 329
EP-A2- 0 378 239    EP-A2- 0 520 772
CH-A- 284 519    DE-A1- 3 403 360
DE-A1- 19 905 775    DE-C1- 19 722 257
JP-A- H0 241 839    US-A- 4 566 829
US-A1- 2006 051 170    US-A1- 2007 264 095

• DATABASE WPI Week 197606 Thomson Scientific, London, GB; AN 1976-B2618X XP002730609, -& SU 464 450 A (RUSAKOV K I) 21. Juli 1975 (1975-07-21)

EP 2 361 712 B1

**Beschreibung**

Die Erfindung betrifft ein Verfahren zum Erzeugen eines Gewindes auf einer, insbesondere numerisch gesteuerten, Werkzeugmaschine mit einem Gewindeerzeugungswerkzeug, wobei das Gewindeerzeugungswerkzeug von einer Werkzeugspindel gedreht wird, um in einer Bohrung ein Gewinde zu erzeugen, wobei gleichzeitig gemäß der Gewindesteigung das Gewindeerzeugungswerkzeug und die Bohrung auf einander zu oder ineinander bewegt werden. Des Weiteren betrifft die Erfindung eine Kopplungsvorrichtung sowie eine, insbesondere numerisch gesteuerte, Werkzeugmaschine.

Bei einem gattungsgemäßen Verfahren wird in das Futter einer Werkzeugspindel einer Werkzeugmaschine ein stiftförmiges Gewindeschneidwerkzeug eingesetzt, um in eine vorgebohrte Bohrung ein Gewinde zu schneiden. Hierzu wird das Gewindeerzeugungswerkzeug nicht nur von der Werkzeugspindel drehangetrieben, es wird auch in axiale Richtung relativ zum Werkstück vorgeschoben, wobei sich der axiale Verschiebeweg aufgrund der gewünschten bzw. benötigten Gewindesteigung aus der Drehbewegung der Werkzeugspindel ergibt. Demgemäß ist eine genaue, synchrone Kopplung der Drehbewegung und der axialen Bewegung erforderlich, was beispielsweise durch die numerische Steuerung der Werkzeugmaschine veranlasst werden kann.

Dabei ergibt sich bei üblichen Werkzeugmaschinen eine Synchronisationsgrenze bzw. maximale Drehzahl der Werkzeugspindel, bis zu der die genannte Synchronisierung der Drehbewegung des Werkzeugs und dessen axialer Vorschub sichergestellt sind. Abhängig von der Signalverarbeitungszeit der Maschinensteuerung darf diese maximale Drehzahl nicht überschritten werden, auch im Falle dessen, dass bedienerseitig eine höhere Drehzahl vorgegeben wird, da die Maschine bzw. deren Steuerung nicht in der Lage ist, bei einer höheren Drehzahl als der Synchronisationsgrenze den Vorschub kontrolliert mit der Drehzahl zu synchronisieren.

Dass die Drehzahl beim Gewindeerzeugen gar nicht die vom Bediener eingestellte Drehzahl erreicht, fällt dabei unter Umständen gar nicht auf, da aufgrund der begrenzten Gewindelänge und damit der begrenzten Anzahl von Umdrehungen, die von der Gewindelänge und der Steigung des zu erzeugenden Gewindes abhängt, die Bearbeitungszeit zum Erzeugen des Gewindes so kurz ist, dass die maximale eingestellte Drehzahl gar nicht erreicht wird oder die Anzeige der Drehzahl am Maschinendisplay aufgrund des dynamischen Charakters des Gewindeschneidens so ungenau ist, dass der Bediener die Abweichung der tatsächlichen Drehzahl von der vorgegebenen Drehzahl gar nicht wahrnehmen kann. Wegen der ständigen Beschleunigungen und Verzögerungen beim Gewindeerzeugen in der Vorwärtsrichtung mit einer ersten Drehrichtung und in der Rückwärtsrichtung beim Herausschrauben des Gewindeerzeugungswerkzeugs aus dem geschnittenen Gewinde in der Gegendrehrichtung wird praktisch nie ein Verharrungszustand mit gleichbleibender Drehzahl erreicht und somit auch nie ein ausreichend lang angezeigter Verharrungswert für die Drehzahl dem Bediener zur Kenntnis gegeben.

Für die Beschleunigung der Werkzeugspindel steht nur etwa die Hälfte der Gewindetiefe zur Verfügung, bis die Werkzeugspindel wieder verzögert werden muss.

Nachteilig ist demgemäß, dass ohne großen Aufwand an der Maschinensteuerung mit der genannten Begrenzung der Synchronisationsgeschwindigkeit zwischen Drehung und Axialvorschub der Werkzeugspindel die maximale Drehgeschwindigkeit des Gewindeerzeugungswerkzeugs und damit auch die Erzeugungsgeschwindigkeit des Werkzeugs begrenzt ist.

Daher liegen auch für die Wirtschaftlichkeit des Verfahrens entsprechende Grenzen vor.

Das Dokument EP 0 378 239 A2 offenbart eine Übersetzungsvorrichtung gemäß dem Oberbegriff des unabhängigen Anspruchs 2 mit einem Planetengetriebe zur Erhöhung oder Erniedrigung der Drehgeschwindigkeit eines sich drehenden Werkzeugs zum Bohren, Stirnfräsen oder Schneiden.

Das Dokument US 2007/0264095 A1 offenbart ein Verfahren zum Erzeugen eines Gewindes mit den Merkmalen des Oberbegriffs des unabhängigen Anspruchs 1.

Der Erfindung liegt die Aufgabe zugrunde, ein Verfahren der eingangs genannten Art sowie eine entsprechende Werkzeugmaschine so fortzubilden, dass es möglich wird, bei gegebener Leistungsfähigkeit der Maschinensteuerung hinsichtlich ihrer Synchronisationsfähigkeit kürzeren Taktzeiten beim Gewindeerzeugen zu erreichen. So soll auch die Wirtschaftlichkeit des Verfahrens verbessert werden können.

Die Lösung dieser Aufgabe durch die Erfindung ist verfahrensgemäß durch die Merkmale des unabhängigen Anspruchs 1 definiert. Bei dieses Verfahren wird die Drehgeschwindigkeit ($\omega_1$) des Gewindeerzeugungswerkzeugs (2) mittels eines zwischen Werkzeugspindel (3) und Gewindeerzeugungswerkzeug (2) wirksam, in beiden Drehrichtungen ortsfest und in axialer Richtung verschieblich angeordneten Übersetzungsgetriebes (6) gegenüber der Drehgeschwindigkeit ($\omega_2$) der Werkzeugspindel (3) ins Schnelle übersetzt.

Erfindungsgemäß ist ebenfalls eine Kopplungsvorrichtung mit den Merkmalen des unabhängigen Anspruchs 2 für eine, insbesondere numerisch gesteuerte, Werkzeugmaschine zum Erzeugen eines Gewindes mit einem Gewindeerzeugungswerkzeug vorgesehen, wobei die Kopplungsvorrichtung mindestens eine Werkzeugspindel aufweist, die drehbar mit einer Werkzeugaufnahme verbunden ist, wobei zwischen der Werkzeugspindel und der Werkzeugaufnahme ein Übersetzungsgetriebe wirksam angeordnet ist, das zur Übersetzung der Drehgeschwindigkeit der Werkzeugspindel ins Schnelle ausgebildet ist, die erfindungsgemäß dadurch gekennzeichnet ist, dass zentrisch durch die Werkzeugspindel (3) zur Werkzeugaufnahme (15) hin ein Kühlmittelkanal (39) verläuft, der im Bereich des Übersetzungsgetriebes (6) in einem Kühlmittelrohr (40) geführt ist, wobei das Kühlmittelrohr (40) bevorzugt in der Werkzeugspindel (3) sowie in der Werkzeugaufnahme (15) in Lagern gelagert ist, wobei sich das Kühlmittelrohr (40) im Betrieb mit einer Drehzahl gegenüber der Werkzeugspindel (3) und/oder der Werkzeugaufnahme (15) in Höhe der Differenz der Drehgeschwindigkeit ($\omega_2$) der Werkzeugspindel (3) und der Drehgeschwindigkeit ($\omega_1$) der Werkzeugaufnahme (15, 16) dreht.

Da an der Synchronisationsgrenze der jeweiligen sich im Einsatz befindlichen Werkzeugmaschinen ohne größeren Aufwand nichts geändert werden kann, wird also erfindungsgemäß vorgeschlagen, ein Übersetzungsgetriebe zwischen die Maschinenspindel der Werkzeugmaschine und das Werkzeugfutter für das Gewindeerzeugungswerkzeug zu schalten oder anzuordnen, wobei das Übersetzungsgetriebe mit einer vorgegebenen Übersetzung die Drehung der Werkzeugspindel in eine entsprechende Drehung des Werkzeugfutters umsetzt, wobei die Drehgeschwindigkeit der Drehung des Werkzeugfutters um einen Übersetzungsfaktor von vorzugsweise größer als 1 in die Drehgeschwindigkeit der Werkzeugspindel übersetzt wird.

Das Erzeugen des Gewindes kann gemäß der Erfindung beispielsweise durch Schneiden (Gewindeschneiden) oder Formen (Gewindeformen) erfolgen.

Das Übersetzungsgetriebe hat dabei bevorzugt eine einzige feste Übersetzung. Es kann als Vorgelegegetriebe ausgebildet sein.

Vorzugsweise weist das Übersetzungsgetriebe einen, insbesondere inneren, Ring auf, der drehfest mit der Spindel gekoppelt ist, wobei in oder an dem Ring wenigstens ein Zahnrad drehbar angeordnet ist. Das wenigstens ein Zahnrad greift bevorzugt innenseitig in ein weiteres, insbesondere inneres, Zahnrad ein, das mit der Spannzange drehfest gekoppelt ist. Besonders bevorzugt ist der innere Ring von einem äußeren Ring umgeben, wobei der äußere Ring des weiteren innenseitig einen umlaufenden Zahnkranz aufweisen kann, so dass das wenigstens eine Zahnrad außenseitig in den Zahnkranz eingreift oder eingreifen kann.

Im Unterschied zum Fräswerkzeug, das sich im Wesentlichen mit derselben Drehzahl und immer in die gleiche Drehrichtung dreht, ist beim Gewindeerzeugen ein permanenter Wechsel zwischen Beschleunigung und Verzögerung des Werkzeugs und ein Drehrichtungswechsel beim Erreichen der tiefsten Stelle im Gewindeloch und dem Zurückholen des Gewindeerzeugungswerkzeugs zu beachten. Aufgrund des Einsatzes des erfindungsgemäß vorgeschlagenen Übersetzungsgetriebes können die Messfehler und die Synchronisationsfehler beim Messen des Drehwinkels des Werkzeugs entsprechend des Übersetzungsfaktors des Übersetzungsgetriebes ansteigen, da die Messauflösung der Maschine unverändert bleibt.

Daher sieht eine bevorzugte Weiterbildung der Erfindung vor, dass zwischen der Werkzeugspindel und dem Gewindeerzeugungswerkzeug wirksam ein in axiale Richtung elastisches Element angeordnet ist. Das elastische Element kann durch ein Bauteil aus elastomerem Material oder Gummimaterial gebildet werden; alternativ ist auch als elastisches Element ein Federelement aus Federstahl möglich. Damit kann der erhöhte Messfehler bzw. Synchronisationsfehler insofern unschädlich gehalten werden, als dass eine gewisse axiale Elastizität des Gewindeerzeugungswerkzeugs zur Werkzeugspindel gewährleistet ist. Demgemäß wird ein Minimallängenausgleichsfutter vorgeschlagen, das beispielsweise zwischen dem Übersetzungsgetriebe und dem Gewindeerzeugungswerkzeug angeordnet wird, um im Falle von Fehlern eine Kompensation zu erlauben. Diesbezüglich wird auf die EP 0 887 135 A1 hingewiesen, in der eine konkrete konstruktive Lösung für ein solches Ausgleichsfutter mit axialer Nachgiebigkeit offenbart wird.

Das Übersetzungsgetriebe ist ferner mit einem Gehäuseteil an einer Drehmomentstütze in Drehrichtung ortsfest, jedoch in axiale Richtung verschieblich angeordnet.

Die Drehmomentstütze umfasst eine sich in axiale Richtung erstreckende Führungsstange, an der sich ein Gehäuseteil abstützt. An dem Gehäuseteil kann hierzu eine Gleit- oder Wälzbuchse angeordnet sein, in der die Führungsstange axialverschieblich gelagert ist.

Es wird also insofern eine Drehmomentstütze zum Abfangen oder Abstützen von Drehmomenten am feststehenden Teil bzw. am Gehäuse des Übersetzungsgetriebes vorgesehen, die - im Unterschied zu den nur in einer Drehrichtung wirksamen Drehmomentstützen bei gängigen Schnellläufern in der Frästechnik - spielfrei lagefixiert ist. Die Drehmomentstütze muss beim Gewindeerzeugen in beide Drehrichtungen Drehmomente abstützen, weshalb sie gegen das Gehäuse in beiden Drehrichtungen ortsfest sein muss; die axiale Vorschubbewegung muss freilich zugelassen werden, soweit das Gewindeerzeugungswerkzeug axial bewegt wird und nicht stattdessen das Werkstück bewegt wird.

Als Übersetzungsgetriebe kann ein an sich bekanntes und gegebenenfalls modifiziertes Übersetzungsgetriebe verwendet werden, das als "Schnellläufer", als "Fräsgetriebe" oder als "Vorgelege" für Fräswerkzeuge bekannt ist.

Das Kühlmittelrohr ist bevorzugt an der Werkzeugaufnahme drehfest fixiert. Alternativ oder ergänzend zu der bevorzugten Kühlmittelzufuhr ist auch eine Ausführung für Minimalmengenschmieruhg möglich oder vorteilhaft.

Des Weiteren betrifft die Erfindung eine Werkzeugmaschine zum Erzeugen eines Gewindes mit einem Gewindeerzeugungswerkzeug, insbesondere eine numerisch gesteuerte Werkzeugmaschine, mit einer Kopplungsvorrichtung gemäß der Erfindung.

Vorzugsweise kann mittels der Werkzeugspindel das oder ein Gewindeerzeugungswerkzeug gedreht und gleichzeitig gemäß der Gewindesteigung in axiale Richtung vorgeschoben werden, um in einer Bohrung eines Werkstücks ein Gewinde zu erzeugen.

Die Erfindung wird im Folgenden anhand von Ausführungsbeispielen näher beschrieben, die in den Figuren 1 bis 9 dargestellt sind.

Dabei zeigt

FIG 1        eine prinzipielle Darstellung eines Teils der erfindungsgemäßen Werkzeugmaschine,

FIG 2 bis 6     eine Drehmomentstütze gemäß der Erfindung,

FIG 7        eine erste Ausführungsform der Kopplungsvorrichtung für die Werkzeugmaschine gemäß der Erfindung in einer Schnittdarstellung,

FIG 8        die erste Ausführungsform gemäß FIG 7 in einer zweiten, zur ersten Schnittdarstellung orthogonalen Schnittdarstellung und

FIG 9        eine zweite Ausführungsform der Kopplungsvorrichtung für eine Werkzeugmaschine gemäß der Erfindung in einer Schnittdarstellung.

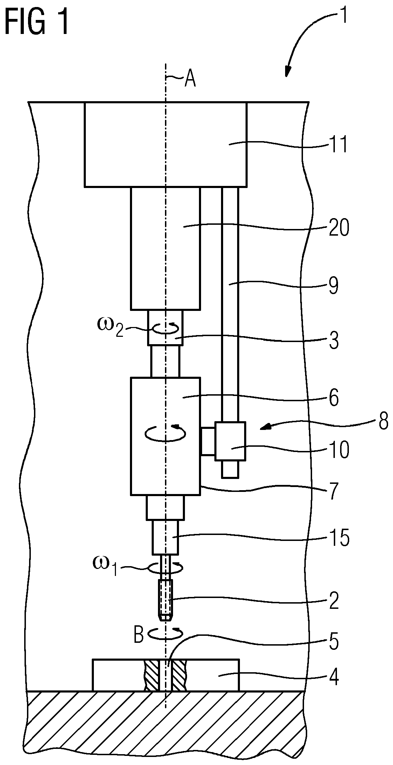

FIG 1 zeigt schematisch die erfindungsgemäße Kopplungsvorrichtung 20 einer Werkzeugmaschine 1. Der Schlitten 11 der Werkzeugmaschine 1 nimmt an seinem unteren, zu einem Gewindeerzeugungswerkzeug 2 hin gerichteten Ende eine rotierbare Werkzeugspindel 3 auf. Der Schlitten 11 weist weiterhin an dem unteren Ende seitlich eine nach unten gerichtete Führungsstange 9 auf.

Die Werkzeugspindel 3 ist drehbar gekoppelt mit einem Übersetzungsgetriebe 6, an das in Richtung zum Gewindeerzeugungswerkzeug 2 eine Spannzange (oder: Werkzeugaufnahme) 15 angekoppelt ist. In der Spannzange 15 befindet sich ein Gewindeerzeugungswerkzeug 2, das eine Gewindebohrung 4 in einem Werkstück 5 ausführen kann.

Die Spindel 3 dreht sich mit einer Drehzahl $\omega_2$, die Spannzange 15 sowie das Gewindeerzeugungswerkzeug 2 drehen sich mit einer Drehgeschwindigkeit $\omega_1$.

Die Werkzeugmaschine 1 ist als numerisch gesteuerte Maschine ausgeführt, wobei die Werkzeugspindel 3 - numerisch gesteuert - nicht nur eine Drehbewegung um eine Achse B ausführen, sondern auch in axiale Richtung A numerisch gesteuert translatorisch verfahren werden kann. Wird der Drehbewegung um die Achse B eine axiale Vorschubbewegung entlang der Achse A überlagert, ergibt sich eine Schraubenlinie. Diese wird benötigt, wenn in das Werkstück 5 mit der Bohrung 4 ein Gewinde eingeschnitten werden soll.

Hierzu wird das Gewindeerzeugungswerkzeug 2 mit der Werkzeugspindel 3 verbunden und das Gewindeerzeugen in an sich bekannter Weise durchgeführt.

Wesentlich ist nunmehr, dass zwischen der Werkzeugspindel 3 und dem Gewindeerzeugungswerkzeug 2 das Übersetzungsgetriebe 6 wirksam angeordnet ist. Das Übersetzungsgetriebe 6 ist zur Übersetzung der Drehgeschwindigkeit $\omega_2$ der Werkzeugspindel 3 ins Schnelle ausgebildet. Demgemäß gilt, dass sich die Drehgeschwindigkeit $\omega_1$ des Gewindeerzeugungswerkzeugs 2 ergibt zu

$$\omega_1 = \omega_2 \ x \ i,$$

wobei i das Übersetzungsverhältnis des Übersetzungsgetriebes 6 und größer als eins ist.

Das Übersetzungsgetriebe 6 wird im Betrieb mit einem Drehmoment um die Achse B beaufschlagt, das abgestützt werden muss. Hierzu ist eine Drehmomentstütze 8 vorgesehen, die die Führungsstange 9 umfasst, die ortsfest am Schlitten 11 der Werkzeugspindel 3 fixiert ist und sich nach unten bis seitlich zum Übersetzungsgetriebe 6 erstreckt.

Das Übersetzungsgetriebe 6 ist in einem Gehäuse 7 angeordnet. Seitlich am Gehäuse 7 ist eine Drehmomentstütze 8 fixiert, die eine innenliegende Durchgangsbohrung 10 aufweist. In die Durchgangsbohrung 10 der Drehmomentstütze 8 ist die Führungsstange 9 eingeführt, die wiederum drehfest mit der Spindel 3 verbunden ist. Demgemäß kann das Übersetzungsgetriebe 6 in Achsrichtung A gleiten, indes sich aber nicht um die Achse B mitdrehen, so dass eine Drehmomentstütze ausgebildet wird.

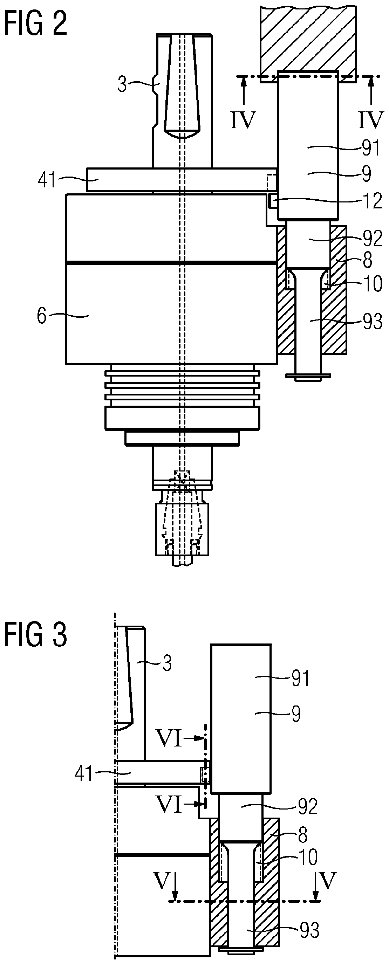

Die Figuren 2 bis 6 zeigen ein Ausführungsbeispiel für die Drehmomentstütze 8 gemäß der Erfindung im Detail. Die Figuren 2 und 3 zeigen dabei die Position der Führungsstange 9. Die Führungsstange 9 weist eine im Wesentlichen zylindrische Form auf und umfasst dabei drei Abschnitte 91, 92 und 93, wobei sich ihr Durchmesser von einem Abschnitt zum folgenden nach unten hin stufenweise reduziert. Insofern verringert sich der Durchmesser der Führungsstange 9 in einer ersten Stufe nach etwa der Hälfte ihrer Länge vom ersten Abschnitt 91 auf den zweiten Abschnitt 92, um sich dann nach etwa zwei Drittel ihrer Länge in einer zweiten Stufe vom zweiten Abschnitt 92 auf den dritten Abschnitt 93 erneut zu verringern. Die zweite Stufe ist teilweise abgerundet. Der sich im unteren Teil ergebende Abschnitt 93 der Führungsstange 9 mit dem geringsten Durchmesser ist in der Drehmomentstütze 8 in einer Durchgangsbohrung 10 mit sich nach unten hin ebenfalls verjüngendem Durchmesser versenkt.

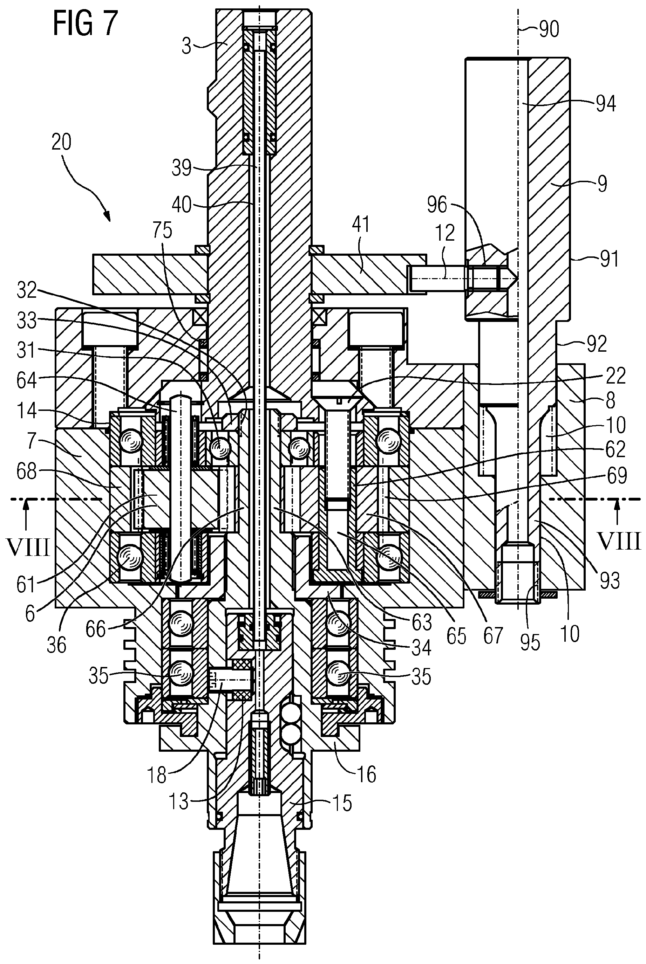

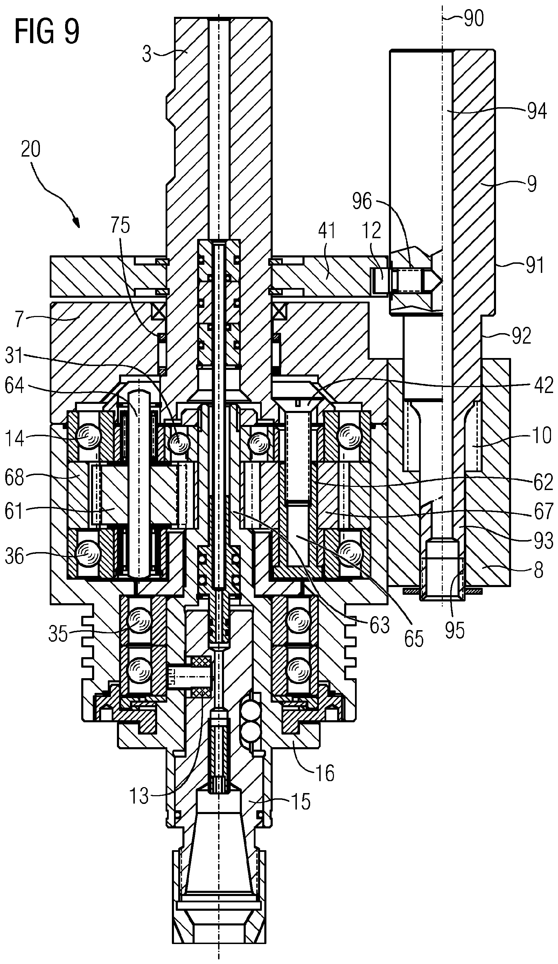

Die Führungsstange 9 weist entlang ihrer Achse 90 ihrerseits eine erste Bohrung 94 auf, die aus den Figuren 7 und 9 ersichtlich ist. Die Bohrung 94 weitet sich zum unteren Ende hin zu einem Gewinde 95 auf. In das Gewinde 95 kann ein Adapter für die Aufnahme eines nicht dargestellten Kühlmittelrohrs eingeschraubt werden. Mit diesem Kühlmittelrohr kann über die Transportarretierung Kühlmedium zum Gewindeerzeugungswerkzeug 2 geleitet werden.

Des weiteren weist die Führungsstange 9 im oberen Teil des ersten Abschnitts 91 mit dem größten Durchmesser eine zweite, radial verlaufende Bohrung 96 auf, die sich quer zur ersten Bohrung 94 erstreckt und ein Arretierelement 12 aufnimmt.

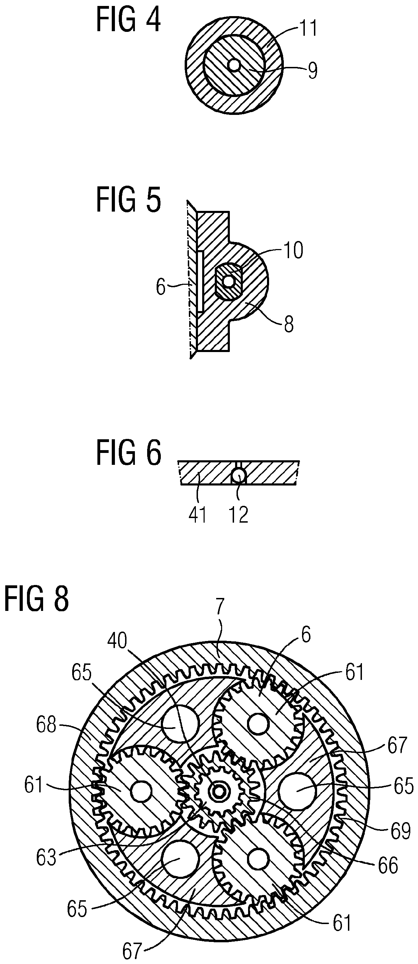

Um zu verhindern, dass sich die Führungsstange 9 mit dem Arretierelement 12 dreht, ist der dritte Abschnitt 93 mit zwei planparallelen Flächen ausgeführt, was aus Fig. 5 ersichtlich ist.

FIG 2 zeigt die Führungsstange 9 dabei in einer Position bei Betrieb der Spindel 3. In diesem Fall ist die Spindel 3 frei rotierbar in Bezug auf die Stütze 9, da das Arretierelement 12 nicht mit der Spindel 3 verbunden ist.

FIG 3 zeigt die Drehmomentstütze 8 in gegenüber der Spindel 3 fixierter Position. Dies ist die Position bei abgenommenem Schnellläufer. In diesem Fall ist die Führungsstange 9 nach oben verschoben, so dass das Arretierelement 12 die Spindel 3 in ihrer Winkellage fixiert. Als Kopplungselement zwischen Arretierelement 12 und Spindel 3 dient ein Ring 41, der oberhalb des Gehäuses 6, auf dessen von der Spannzange 15 abgewandter Seite, die Spindel 3 umläuft und an seiner Außenseite einen ausgesparten Bereich aufweist, in den das Arretierelement 12 zwecks Fixierung mit der Spindel eingreifen kann.

Die Figuren 4 bis 6 zeigen Schnitte durch die erfindungsgemäße Drehmomentstütze. Aus der Position der Führungsstange 9 ist erkennbar, dass die Drehmomentstütze 8 das Drehmoment in beide Drehrichtungen auffängt.

FIG 7 zeigt einen Querschnitt durch eine erfindungsgemäße Kopplungsvorrichtung 20 für eine Werkzeugmaschine.

Wiederum ist erkennbar, dass die Spindel 3 in das Übersetzungsgetriebe 6 eingreift, von dem dann die Drehzahl $\omega_2$ der Spindel auf die Drehzahl $\omega_1$ der Spannzange 15 übertragen wird. Seitlich am Übersetzungsgetriebe 6 ist die Drehmomentstütze 8 fixiert, wobei in diesem Fall das Arretierelement 12 der Führungsstange 9 in eine Ausnehmung eines Rings 41 der Spindel 3 eingreift, so dass die Spindel 3 gegenüber der Drehmomentstütze 8 in der Winkellage fixiert ist.

Durch das Eingreifen des Arretierelements 12 in den Ring 41 wird verhindert, dass sich die Winkellage der Arretierung oder Drehmomentstütze 8 gegenüber des Apparats vom Werkzeugwechsler in die Werkzeugspindel 3 verändert.

Im Folgenden wird auf den inneren Aufbau des Getriebes 6 eingegangen, der sowohl in FIG 7 als auch in einem dazu senkrechten Schnitt in FIG 8 dargestellt ist.

Die Werkzeugspindel 3 ist drehbar auf Nadellagern 75 gegenüber dem Gehäuse 7 des Getriebes 6 gelagert und innerhalb dieses Gehäuses 6 drehfest mit einem inneren Ring 67 verbunden. Der innere Ring 67 ist innerhalb eines nicht drehbaren äußeren, drehfest mit dem Gehäuse 7 verbundenen Rings 68 drehbar gelagert. Der äußere Ring 68 bildet an seiner Innenseite einen Zahnkranz 69 aus.

Der innere Ring 67 weist mehrere Lagerbolzen 64 für Zahnräder 61 auf. Die Zahnräder 61 sind entlang des Umfangs des inneren Rings 67 angeordnet sind und greifen auf ihrer Innenseite in ein inneres Zahnrad 66 ein, das von der Spindel 3 weg drehfest mit einer Spannzangenaufnahme 16 gekoppelt ist. Außenseitig sind die Zahnräder 61 durch den Zahnkranz 69 geführt.

Der innere Ring 67 weist des Weiteren Bohrungen 65 auf, in die jeweils eine Schraube 42 eingreift, die an den inneren Ring 67 einen Bolzen 62 ankoppelt.

Als Lagerung des inneren Rings 67 innerhalb des äußeren Rings 68 und sind außen umlaufend am inneren Ring 67 oberhalb und unterhalb der Zahnräder 61 Lager 14 und 36 angeordnet. Der Lagerbolzen 62 greift hierzu zwischen eine an der Spannzange fixierte Spannmutter 34 als axiale Stütze und das Lager 36.

Der innere Ring 67 ist um den spindelseitigen Endbereich der Spannzangenaufnahme 16 herum gelagert. Hierzu sind innen umlaufend am inneren Ring 67 oberhalb der Zahnräder 61 Innenlager 31 angeordnet.

Die Zahnräder 61 sind in einer Ebene angeordnet und weisen einen Lagerbolzen 64 auf, mit dem diese innerhalb des inneren Rings 67 gelagert sind.

Das innere Zahnrad 66 weist innenseitig einen Zahnkranz auf, innerhalb dessen ein innerstes Zahnrad 63 drehfest fixiert ist, das zum Gewindeerzeugungswerkzeug 2 hin als Splinewelle ausgebildet ist und in die Spannzangenaufnahme 16 übergeht, innerhalb derer werkzeugseitig die Spannzange 15 aufgenommen ist. Das innerste Zahnrad 63 bildet daher eine formschlüssige Kopplung mit dem inneren Zahnrad 66 aus und koppelt damit die Spannzange 15 mit dem inneren Zahnrad 66 des Getriebes 6 drehfest.

Die Spannzangenaufnahme 16 ist mittels eines Lagers 35 ebenfalls drehbar innerhalb des Gehäuses 7 gelagert.

Am spindelseitigen Ende der Spannzangenaufnahme 16 befindet sich ein Gewinde 32, auf das eine Mutter 33 zur Bildung eines axialen Anschlags aufgeschraubt ist.

Die Spannzangenaufnahme 16 weist seitlich eine zylindrische Bohrung auf und nimmt darin ein ringförmiges elastisches Element 13 auf, in das ein Schraubbolzen 18 eingreift. Der Schraubbolzen 18 ist innerhalb des Lagers 35 fixiert. Auf diese Weise entsteht ein axiales Spiel zwischen Spannzange 15 und Spannzangenaufnahme 16.

Zentrisch durch die Werkzeugspindel 3 verläuft zur Spannzange 15 hin ein Kühlmittelkanal 39, der im Bereich des Übersetzungsgetriebes 6 in einem Kühlmittelrohr 40 geführt ist.

Für die Kopplungsvorrichtung gemäß FIG 9 gelten die obigen Ausführungen zur Kopplungsvorrichtung gemäß FIG 7 und 8 entsprechend.

Das Kühlmittelrohr 40 gemäß FIG 7 ist innerhalb der Spannzange 15 durch O-Ringe axial verschieblich befestigt.

Des Weiteren weist das Kühlmittelrohr 40 an seinem zur Spindel 3 hin gerichteten Ende mehrere O-Ringe zur Abdichtung gegenüber der Spindel 3 auf, die lediglich statisch dichten müssen, da diese O-Ringe nur durch den Drehzahlunterschied $\omega_1 - \omega_2$ belastet werden. Somit entsteht lediglich eine radiale Relativbewegung.

Das Kühlmittelrohr 40 gemäß FIG 9 ist innerhalb der Spannzangenaufnahme 16 befestigt und gedichtet durch Löten oder Kleben. Des Weiteren weist das Kühlmittelrohr 40 zur Lagerung gegenüber der Spannzange 15 O-Ringe auf, die nur durch die axiale Relativbewegung belastet werden.

Des Weiteren weist das Kühlmittelrohr 40 an seinem zur Spindel 3 hin gerichteten Ende mehrere O-Ringe zur Abdichtung gegenüber der Spindel 3 auf, die lediglich statisch dichten müssen, da diese O-Ringe nur durch den Drehzahlunterschied $\omega_1 - \omega_2$ belastet werden. Somit entsteht lediglich eine radiale Relativbewegung.

**Bezugzeichenliste**

| | |
|---|---|
| 1 | Werkzeugmaschine |
| 2 | Gewindeerzeugungswerkzeug |
| 3 | Werkzeugspindel |
| 4 | Bohrung |
| 5 | Werkstück |
| 6 | Übersetzungsgetriebe |
| 7 | Gehäuse |
| 8 | Drehmomentstütze |
| 9 | Führungsstange |
| 10 | Bohrung |
| 11 | Schlitten |
| 12 | Arretierelement |
| 13 | Elastisches Element |
| 14 | Übertragungselement |
| 15 | Spannzange/Werkzeugaufnahme |
| 16 | Spannzangenaufnahme |
| 18 | Schraubbolzen |
| 20 | Kopplungsvorrichtung |
| 22 | Schraube |
| 31 | Innenlager |
| 32 | Gewinde |
| 33 | Mutter |
| 34 | Spannmutter |
| 35 | Lager |
| 36 | Außenlager |
| 39 | Kühlmittelkanal |
| 40 | Rohr |
| 41 | Ring |
| 42 | Schraube |
| 61 | Zahnrad |
| 62 | Verbindungsbolzen |
| 63 | innerstes Zahnrad |
| 64 | Lagerbolzen |
| 65 | Bohrung |
| 66 | inneres Zahnrad |
| 67 | innerer Ring |
| 68 | äußerer Ring |
| 69 | Zahnkranz |
| 75 | Nagellager |
| 90 | Achse |
| 91 | erster Abschnitt |
| 92 | zweiter Abschnitt |
| 93 | dritter Abschnitt |
| 94 | erste Bohrung |
| 95 | Gewinde |
| 96 | zweite Bohrung |
| A | axiale Richtung |
| B | Drehachse |
| $\omega_1$ | Drehgeschwindigkeit des Gewindeerzeugungswerkzeugs |
| $\omega_2$ | Drehgeschwindigkeit der Werkzeugspindel |

**Patentansprüche**

1. Verfahren zum Erzeugen eines Gewindes auf einer, insbesondere numerisch gesteuerten, Werkzeugmaschine (1) mit einem Gewindeerzeugungswerkzeug (2), wobei das Gewindeerzeugungswerkzeug (2) von einer Werkzeugspindel (3) gedreht wird, um in einer Bohrung (4) ein Gewinde zu erzeugen,

   wobei gleichzeitig gemäß der Gewindesteigung das Gewindeerzeugungswerkzeug (2) und die Bohrung (4) auf einander zu oder ineinander bewegt werden,
   die Drehgeschwindigkeit ($\omega_1$) des Gewindeerzeugungswerkzeugs (2) mittels eines zwischen Werkzeugspindel (3) und Gewindeerzeugungswerkzeug (2) wirksam, in beiden Drehrichtungen ortsfest und in axialer Richtung verschieblich angeordneten Übersetzungsgetriebes (6) gegenüber der Drehgeschwindigkeit ($\omega_2$) der Werkzeugspindel (3) ins Schnelle übersetzt wird, **dadurch gekennzeichnet, dass** das Übersetzungsgetriebe (6) mit einem Gehäuseteil (7) an einer Drehmomentstütze (8) in Drehrichtung ortsfest, jedoch in axiale Richtung (A) verschieblich angeordnet ist, wobei die Drehmomentstütze (8) eine sich in axiale Richtung (A) erstreckende Führungsstange (9) umfasst, an der sich das Gehäuseteil (7) abstützt, wobei die Führungsstange (9) entlang ihrer Achse (90) eine erste Bohrung (94) aufweist, die sich zu einem unteren Ende hin zu einem Gewinde (95) aufweitet, in das ein Adapter für die Aufnahme eines Kühlmittelrohrs einschraubbar ist, mittels welchem Kühlmedium zum Gewindeerzeugungswerkzeug (2) geleitet werden kann.

2. Kopplungsvorrichtung für eine, insbesondere numerisch gesteuerte, Werkzeugmaschine (1) zum Erzeugen eines Gewindes mit einem Gewindeerzeugungswerkzeug (2),

wobei die Kopplungsvorrichtung mindestens eine Werkzeugspindel (3) aufweist, die drehbar mit einer Werkzeugaufnahme (15) verbunden ist, wobei

zwischen der Werkzeugspindel (3) und der Werkzeugaufnahme (15) ein Übersetzungsgetriebe (6) wirksam angeordnet ist, das zur Übersetzung der Drehgeschwindigkeit ($\omega_2$) der Werkzeugspindel (3) ins Schnelle ausgebildet ist, wobei das Übersetzungsgetriebe mit einem Gehäuseteil (7) an einer Drehmomentstütze (8) in Drehrichtung ortsfest, jedoch in axiale Richtung (A) verschieblich angeordnet ist, wobei die Drehmomentstütze (8) eine sich in axiale Richtung (A) erstreckende Führungsstange (9) umfasst, an der sich das Gehäuseteil (7) abstützt, wobei die Führungsstange (9) entlang ihrer Achse (90) eine erste Bohrung (94) aufweist, **dadurch gekennzeichnet,**

**dass** zentrisch durch die Werkzeugspindel (3) zur Werkzeugaufnahme (15) hin ein Kühlmittelkanal (39) verläuft, der im Bereich des Übersetzungsgetriebes (6) in einem Kühlmittelrohr (40) geführt ist, wobei das Kühlmittelrohr (40) bevorzugt in der Werkzeugspindel (3) sowie in der Werkzeugaufnahme (15) in Lagern gelagert ist, wobei sich das Kühlmittelrohr (40) im Betrieb mit einer Drehzahl gegenüber der Werkzeugspindel (3) und/oder der Werkzeugaufnahme (15) in Höhe der Differenz der Drehgeschwindigkeit ($\omega_2$) der Werkzeugspindel (3) und der Drehgeschwindigkeit ($\omega_1$) der Werkzeugaufnahme (15, 16) dreht, wobei erste Bohrung (94) der Führungsstange (9) sich zu einem unteren Ende hin zu einem Gewinde (95) aufweitet, in das ein Adapter für die Aufnahme eines Kühlmittelrohrs einschraubbar ist, mittels welchem Kühlmedium zum Gewindeerzeugungswerkzeug (2) geleitet werden kann.

3.  Kopplungsvorrichtung nach Anspruch 2, **dadurch gekennzeichnet, dass** das Übersetzungsgetriebe (6) eine einzige feste Übersetzung aufweist und/oder dass das Übersetzungsgetriebe (6) als Vorlegegetriebe ausgebildet ist.

4.  Kopplungsvorrichtung nach Anspruch 2 oder 3, **dadurch gekennzeichnet, dass** das Übersetzungsgetriebe einen, insbesondere inneren, Ring (67) aufweist, der drehfest mit der Spindel (3) gekoppelt ist, wobei in oder an dem Ring wenigstens ein Zahnrad (61) drehbar angeordnet ist, wobei das wenigstens eine Zahnrad innenseitig in ein weiteres, insbesondere inneres, Zahnrad (66) eingreift, das mit der Spannzange (15) drehfest gekoppelt ist, wobei bevorzugt der innere Ring (67) von einem äußeren Ring (68) umgeben ist, wobei der äußere Ring (68) innenseitig einen umlaufenden Zahnkranz (69) aufweist, wobei das wenigstens eine Zahnrad (61) außenseitig in den Zahnkranz (69) eingreift.

5.  Kopplungsvorrichtung nach einem der Ansprüche 2 bis 4, **dadurch gekennzeichnet, dass** zwischen der Werkzeugspindel (3) und dem Gewindeerzeugungswerkzeug (2) wirksam ein in axiale Richtung (A) elastisches Element angeordnet ist.

6.  Kopplungsvorrichtung nach Anspruch 5, **dadurch gekennzeichnet, dass** das elastische Element durch ein Bauteil aus elastomerem Material oder Gummimaterial oder dass das elastische Element durch ein Federelement aus Federstahl gebildet wird.

7.  Kopplungsvorrichtung nach einem der Ansprüche 2 bis 6, **dadurch gekennzeichnet, dass** das Übersetzungsgetriebe (6) mit dem Gehäuseteil (7) an der Drehmomentstütze (8) auch in Gegendrehrichtung ortsfest angeordnet ist.

8.  Kopplungsvorrichtung nach Anspruch 7, **dadurch gekennzeichnet, dass** an dem Gehäuseteil (7) eine Gleit- oder Wälzbuchse (10) angeordnet ist, in der die Führungsstange (9) axial verschieblich gelagert ist.

9.  Kopplungsvorrichtung nach einem der Ansprüche 2 bis 8, **dadurch gekennzeichnet, dass** das Kühlmittelrohr (40) an der Werkzeugaufnahme drehfest fixiert ist.

10. Werkzeugmaschine (1) zum Erzeugen eines Gewindes mit einem Gewindeerzeugungswerkzeug (2), insbesondere numerisch gesteuerte Werkzeugmaschine, mit einer Kopplungsvorrichtung gemäß einem der vorhergehenden Ansprüche 2 bis 9.

11. Werkzeugmaschine nach Anspruch 10, wobei mittels der Werkzeugspindel (3) das oder ein Gewindeerzeugungswerkzeug (2) gedreht und gleichzeitig gemäß der Gewindesteigung in axiale Richtung (A) vorgeschoben werden kann, um in einer Bohrung (4) eines Werkstücks (5) ein Gewinde zu erzeugen.

**Claims**

1.  Method for producing a thread on an in particular numerically controlled machine tool (1) using a thread producing tool (2), the thread producing tool (2) being rotated by a tool spindle (3) in order to produce a thread in a bore (4),

at the same time, the thread producing tool (2) and the bore (4) being moved toward or into one another according to the thread pitch,
the speed of rotation ($\omega_1$) of the thread producing tool (2) being geared up with respect to the speed of rotation ($\omega_2$) of the tool spindle (3) by means of a gear transmission (6) which acts between the tool spindle (3) and the thread producing tool (2), is fixed in both directions of rotation and can be moved in the axial direction, **characterized in that**
the gear transmission (6) is fixed in the direction of rotation to a housing part (7) on a torque support (8), but can be moved in the axial direction (A), the torque support (8) comprising a guide rod (9) which extends in the axial direction (A) and on which the housing part (7) is supported, the guide rod (9) having a first bore (94) along its axis (90) that widens toward a lower end to form a thread (95) in which an adapter for receiving a coolant tube can be screwed, by means of which tube cooling medium can be conducted to the thread producing tool (2).

2. Coupling device for an in particular numerically controlled machine tool (1) for producing a thread using a thread producing tool (2),

the coupling device having at least one tool spindle (3) which is rotatably connected to a tool holder (15),
a gear transmission (6) acting between the tool spindle (3) and the tool holder (15), which gear transmission is designed to gear up the speed of rotation ($\omega_2$) of the tool spindle (3),
the gear transmission (6) being fixed in the direction of rotation to a housing part (7) on a torque support (8), but being moveable in the axial direction (A), the torque support (8) comprising a guide rod (9) which extends in the axial direction (A) and on which the housing part (7) is supported, the guide rod (9) having a first bore (94) along its axis (90),
**characterized in that**
a coolant channel (39) extends centrally through the tool spindle (3) toward the tool holder (15) and is guided in a coolant tube (40) in the region of the gear transmission (6), the coolant tube (40) preferably being mounted in bearings in the tool spindle (3) and in the tool holder (15), the coolant tube (40) rotating during operation at a speed of rotation with respect to the tool spindle (3) and/or the tool holder (15) that is equal to the difference between the rotational speed ($\omega_2$) of the tool spindle (3) and the rotational speed ($\omega_1$) of the tool holder (15, 16), the first bore (94) of the guide rod (9) widening toward a lower end to form a thread (95) in which an adapter for receiving a coolant tube can be screwed, by means of which tube cooling medium can be conducted to the thread producing tool (2).

3. Coupling device according to claim 2, **characterized in that** the gear transmission (6) has a single fixed transmission and/or
**in that** the gear transmission (6) is designed as a countershaft transmission.

4. Coupling device according to either claim 2 or claim 3, **characterized in that** the gear transmission has an, in particular inner, ring (67) which is coupled to the spindle (3) for conjoint rotation, at least one gear (61) being rotatably arranged in or on the ring, the at least one gear engaging on the inside in another, in particular inner, gear (66) which is coupled to the collet (15) for conjoint rotation,
the inner ring (67) preferably being surrounded by an outer ring (68), the outer ring (68) having a circumferential gear rim (69) on the inside, the at least one gear (61) engaging on the outside in the gear rim (69).

5. Coupling device according to any of claims 2 to 4, **characterized in that** an element which is resilient in the axial direction (A) acts between the tool spindle (3) and the thread producing tool (2).

6. Coupling device according to claim 5, **characterized in that** the resilient element is formed by a component made of elastomeric material or rubber material or
**in that** the resilient element is formed by a spring element made of spring steel.

7. Coupling device according to any of claims 2 to 6, **characterized in that** the gear transmission (6) is also fixed to the housing part (7) on the torque support (8) in the opposite direction of rotation.

8. Coupling device according to claim 7, **characterized in that** a sliding or rolling bushing (10) is arranged on the housing part (7), in which bushing the guide rod (9) is mounted so as to be axially moveable.

9. Coupling device according to one of claims 2 to 8, **characterized in that** the coolant tube (40) is non-rotatably fixed on the tool holder.

10. Machine tool (1) for producing a thread using a thread producing tool (2), in particular a numerically controlled machine tool, comprising a coupling device according to any of the preceding claims 2 to 9.

11. Machine tool according to claim 10, wherein the or a thread producing tool (2) can be rotated by means of the tool spindle (3) and at the same time moved in the axial direction (A) according to the thread pitch in order to produce a thread in a bore (4) of a workpiece (5).

## Revendications

1. Procédé permettant la génération d'un filetage sur une machine-outil (1), en particulier à commande numérique, comportant un outil de génération de filetage (2), dans lequel l'outil de génération de filetage (2) est mis en rotation par une broche d'outil (3) afin de générer un filetage dans un alésage (4),

   l'outil de génération de filetage (2) et l'alésage (4) étant déplacés l'un vers l'autre ou l'un dans l'autre de manière simultanée en fonction du pas de filetage,
   la vitesse de rotation ($\omega_1$) de l'outil de génération de filetage (2) est multipliée par rapport à la vitesse de rotation ($\omega_2$) de la broche d'outil (3) au moyen d'un engrenage de transmission (6) qui agit entre la broche d'outil (3) et l'outil de génération de filetage (2), est fixé dans les deux sens de rotation et est disposé de manière déplaçable dans la direction axiale, **caractérisé en ce que** l'engrenage de transmission (6) est disposé de manière fixe avec une partie de boîtier (7) sur un support de couple (8) dans le sens de rotation, mais de manière déplaçable dans la direction axiale (A), le support de couple (8) comprenant une tige de guidage (9) s'étendant dans la direction axiale (A), sur laquelle s'appuie la partie de boîtier (7), la tige de guidage (9) présentant un premier alésage (94) le long de son axe (90) qui s'évase vers une extrémité inférieure pour former un filetage (95), dans lequel un adaptateur destiné à recevoir un tuyau de liquide de refroidissement peut être vissé, au moyen duquel du liquide de refroidissement peut être acheminé vers l'outil de génération de filetage (2).

2. Dispositif d'accouplement pour une machine-outil (1), en particulier à commande numérique, permettant de générer un filetage avec un outil de génération de filetage (2),

   dans lequel le dispositif d'accouplement présente au moins une broche d'outil (3) qui est reliée de manière rotative à un réceptacle d'outil (15), un engrenage de transmission (6) étant effectivement agencé entre la broche d'outil (3) et le réceptacle d'outil (15), lequel engrenage de transmission étant conçu pour multiplier la vitesse de rotation ($\omega_2$) de la broche d'outil (3), l'engrenage de transmission (6) étant disposé de manière fixe avec une partie de boîtier (7) sur un support de couple (8) dans le sens de rotation, mais de manière déplaçable dans la direction axiale (A), le support de couple (8) présentant une tige de guidage (9) s'étendant dans la direction axiale (A), sur laquelle s'appuie la partie de boîtier (7), la tige de guidage (9) présentant un premier alésage (94) le long de son axe (90),
   **caractérisé en ce**
   **qu'**un canal de liquide de refroidissement (39) traverse la broche d'outil (3) en son centre vers le réceptacle d'outil (15) et est guidé dans un tube de liquide de refroidissement (40) dans la zone de l'engrenage de transmission (6), le tube de liquide de refroidissement (40) étant de préférence monté en palier dans la broche d'outil (3) ainsi que dans le réceptacle d'outil (15), le tube de liquide de refroidissement (40), lors de son fonctionnement, tournant à une vitesse par rapport à la broche d'outil (3) et/ou au réceptacle d'outil (15) égale à la différence entre la vitesse de rotation ($\omega_2$) de la broche d'outil (3) et la vitesse de rotation ($\omega_1$) du réceptacle d'outil (15, 16), le premier alésage (94) de la tige de guidage (9) s'évasant vers une extrémité inférieure pour former un filetage (95), dans lequel un adaptateur destiné à recevoir un tube de liquide de refroidissement peut être vissé, au moyen duquel du liquide de refroidissement peut être acheminé vers l'outil de génération de filetage (2).

3. Dispositif d'accouplement selon la revendication 2, **caractérisé en ce que** l'engrenage de transmission (6) présente une seule transmission fixe et/ou **en ce que** l'engrenage de transmission (6) est réalisé en tant qu'engrenage intermédiaire.

4. Dispositif d'accouplement selon la revendication 2 ou 3, **caractérisé en ce que** l'engrenage de transmission présente une bague (67), en particulier intérieure, qui est couplée de manière solidaire en rotation à la broche (3), au moins une roue dentée (61) étant disposée de manière rotative dans ou sur la bague, l'au moins une roue dentée étant mise en prise côté intérieur dans une autre roue dentée (66), en particulier intérieure, laquelle est couplée de manière solidaire en rotation à la pince de serrage (15), la bague intérieure (67) étant de préférence entourée par une bague extérieure (68), la bague extérieure (68) présentant une couronne dentée (69) circonférentielle côté intérieur, l'au moins une roue dentée (61) étant mise en prise dans la couronne dentée (69) côté extérieur.

5. Dispositif d'accouplement selon l'une des revendications 2 à 4, **caractérisé en ce qu'**un élément élastique dans la direction axiale (A) est effectivement disposé entre la broche d'outil (3) et l'outil de génération de filetage (2).

**6.** Dispositif d'accouplement selon la revendication 5, **caractérisé en ce que** l'élément élastique est formé par une pièce structurale en matériau élastomère ou en caoutchouc ou
**en ce que** l'élément élastique est formé par un élément de ressort en acier à ressort.

**7.** Dispositif d'accouplement selon l'une des revendications 2 à 6, **caractérisé en ce que** l'engrenage de transmission (6) est également disposé de manière fixe avec la partie de boîtier (7) sur le support de couple (8) dans le sens de rotation opposé.

**8.** Dispositif d'accouplement selon la revendication 7, **caractérisé en ce qu'**une douille de coulissement ou de roulement (10) est disposée sur la partie de boîtier (7) et dans laquelle la tige de guidage (9) est montée de manière déplaçable axialement.

**9.** Dispositif d'accouplement selon l'une des revendications 2 à 8, **caractérisé en ce que**
le tube de liquide de refroidissement (40) est fixé de manière solidaire en rotation sur le réceptacle d'outil.

**10.** Machine-outil (1) permettant de générer un filetage avec un outil de génération de filetage (2), en particulier machine-outil à commande numérique, comportant un dispositif d'accouplement selon l'une des revendications précédentes 2 à 9.

**11.** Machine-outil selon la revendication 10, dans laquelle le ou un outil de génération de filetage (2) peut être tourné au moyen de la broche d'outil (3) et être en même temps avancé en fonction du pas de filetage dans la direction axiale (A) afin de générer un filetage dans un alésage (4) d'une pièce (5).

FIG 1

FIG 2

3

41

6

91
9
12
92
8
10
93

IV    IV

FIG 3

3

91
9

41

VI
VI

92
8
10

V    V

93

FIG 4

11
9

FIG 5

10
6
8

FIG 6

41  12

FIG 8

7
40    6
65    61
68
67
61    65
63    69
65    66
67    61

FIG 7

FIG 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0378239 A2
- US 20070264095 A1

- EP 0887135 A1